# NEUE EUROPÄISCHE PATENTSCHRIFT

(11) **EP 2 840 015 B2**
(45) Veröffentlichungstag und Bekanntmachung des Hinweises auf die Entscheidung über den Einspruch: **22.01.2025**
(45) Hinweis auf die Patenterteilung: 01.07.2020
(21) Anmeldenummer: 14181612.4
(22) Anmeldetag: 20.08.2014
(51) Int. Cl.: B62K 21/26

(54) **Fahrradgriff**
Bicycle hand grip
Poignée de vélo

(30) Priorität: 22.08.2013 DE 202013007448 U
(43) Veröffentlichungstag der Anmeldung: 25.02.2015
(73) Patentinhaber: Ergon International GmbH, 56070 Koblenz (DE)
(72) Erfinder: Krause, Andreas, 56068 Koblenz (DE)
(74) Vertreter: dompatent von Kreisler Selting Werner - Partnerschaft von Patent- und Rechtsanwälten mbB

(56) Entgegenhaltungen:
- EP-A1- 0 423 422
- EP-A1- 2 500 248
- WO-A1-2011/021132
- WO-A1-2013/026756
- WO-A1-99/39970
- BE-A- 443 664
- DE-U1- 20 303 932
- DE-U1- 202005 013 861
- DE-U1- 202011 104 764
- JP-U- H0 199 789
- US-A- 445 914

## Beschreibung

Die Erfindung betrifft einen Fahrradgriff, insbesondere für Enduro-Fahrräder.

Moderne Fahrradgriffe sind vorzugsweise auf ihren Einsatzzweck angepasst. So gibt es speziell ausgestaltete Fahrradgriffe für Touringräder und Mountainbikes. Bei Mountainbikes gibt es eine Vielzahl besonders ausgestalteter Fahrradgriffe, die je nach individuellen Anforderungen ausgebildet und insbesondere ergonomisch angepasst sind. Die ergonomische Anpassung eines Fahrradgriffs ist einerseits vom Fahrradtyp sowie von dem Benutzer abhängig. Andererseits ist die ergonomische Ausgestaltung insbesondere auch von dem Einsatz des Fahrrads abhängig. So kann es sich beispielsweise um ein für Langstrecken eingesetztes Mountainbike, um ein für Sprints oder ein für Downhill eingesetztes Mountainbike handeln. Ein besonderer Einsatzzweck hinsichtlich der Rahmengeometrie, der Federung etc. ist der Einsatzzweck des Fahrrads als Enduro. Diese Sportart erfordert insbesondere beim Bergabfahren eine besondere Armhaltung. Die Ellenbogen sind insbesondere zum guten Abfedern von Stößen leicht angewinkelt. Dies wird auch durch speziell geformte Endurolenker unterstützt. Diese sind einerseits leicht erhöht und anderseits sind die Lenkerenden leicht in Richtung des Fahrers gebogen.

Insbesondere bei Enduro-Fahrrädern besteht bei der Verwendung bekannter Fahrradgriffe eine ungünstige ergonomische Haltung zwischen dem Handgelenk und dem Unterarm. Hierdurch ist das Handling verschlechtert. Ferner treten leicht Ermüdungen oder Überbeanspruchungen auf.

Aus DE 20 2005 013 861 ist ein Fahrradgriff bekannt, bei dem es sich insbesondere um einen Enduro-Fahrradgriff handelt. Um ein Verdrehen des Fahrradgriffs auf dem Lenker zu vermeiden, weist dieser eine Hülse mit einem Klemmbereich auf. Der Klemmbereich ist von einem Klemmmittel, wie einer Schelle umgeben. An einer Außenseite weist ein die Hülse umgebendes Greifelement dieses Fahrradgriffs einen in radialer Richtung vorstehenden Ansatz als Abrutschsicherung auf.

Aufgabe der Erfindung ist es, einen insbesondere für Enduro-Fahrräder geeigneten Fahrradgriff zu entwickeln, der an die besonderen ergonomischen Ansprüche angepasst ist.

Die Lösung der Aufgabe erfolgt erfindungsgemäß durch die Merkmale des Anspruchs 1.

Der erfindungsgemäße Fahrradgriff, der insbesondere für Enduro-Fahrräder entwickelt wurde, weist eine im Wesentlichen zylindrische Hülse auf. Diese im Inneren des Fahrradgriffs vorgesehene Hülse, die ggf. aus härterem Kunststoff ausgebildet ist, dient zum Aufstecken des Fahrradgriffs auf den Lenker. Insofern ist die Innenseite der Hülse zylindrisch ausgebildet. Die Außenseite kann Erhebungen oder Einbuchtungen aufweisen. Diese können beispielsweise zur besseren Verbindung mit einem die Hülse umgebenden Griffelement dienen. Auch kann die Hülse durchgehende Öffnungen aufweisen, so dass das die Hülse umgebende Griffelement in diesem Bereich durch die Hülse nicht unterstützt ist und somit eine größere Dämpfungseigenschaft aufweist. Die Hülse ist von einem Griffelement umgeben. Bei dem Griffelement handelt es sich üblicherweise um ein gesondertes Element, das mit der Hülse beispielsweise durch Umspritzen verbunden ist. Das Griffelement ist insbesondere aus weicherem Material als die Hülse. Ggf. können die Hülsen und das Griffelement jedoch auch einstückig ausgebildet sein.

Um ein Verdrehen des Fahrradgriffs auf dem Fahrradlenker zu vermeiden, weist die Hülse einen Klemmbereich auf. Dieser ist an der Innenseite des Fahrradgriffs vorgesehen und schließt besonders bevorzugt unmittelbar an die Innenseite des Griffelements an. Der Klemmbereich ist von einem Klemmmittel, insbesondere einem durch eine Schraube oder ein anderes Befestigungselement fixierbare Klemmschelle umgeben. Ein Klemmen des Fahrradgriffs auf dem Fahrradlenker erfolgt durch Verringern des Innendurchmessers des Klemmelements.

Erfindungsgemäß weist das Griffelement eine Außenfläche auf, die in montiertem Zustand zu einer Außenseite des Fahrradlenkers geneigt ist. Die Außenfläche des Griffelements ist diejenige in montiertem Zustand nach außen vom Lenker weg weisende Fläche. Diese Außenfläche des Griffelements ist gegenüber der Außenseite des Fahrradlenkers geneigt. Die Außenseite des Fahrradlenkers ist durch das nach außen weisende Ende des Fahrradlenkers gebildet. Der Fahrradlenker ist üblicherweise rohrförmig ausgebildet, so dass die Außenseite ringförmig ausgebildet ist. Die Außenseite des Fahrradlenkers verläuft üblicherweise senkrecht zu der Längsachse des Fahrradlenkers.

Erfindungsgemäß ist die Außenfläche des Griffelements gegenüber einer Längsachse des Griffs, insbesondere der Hülse des Griffs, um einen Winkel ≠ 90° geneigt. Bei dieser Definition der Neigung der Außenfläche ist diese unabhängig von dem Montagezustand und insbesondere unabhängig von der Ausgestaltung der Außenseite des Fahrradlenkers. Insofern könnte die Außenseite des Fahrradlenkers auch einen Winkel ≠ 90° zur Längsachse des Fahrradlenkers aufweisen, wobei die Anschrägung der Außenseite des Fahrradlenkers vorzugsweise der Neigung der Außenfläche des Fahrradgriffs entspricht, so dass der auf den Fahrradlenker aufgesteckte Fahrradgriff im Wesentlichen vollständig von dem Fahrradlenker ausgefüllt bzw. unterstützt ist.

Erfindungsgemäß ist aufgrund der geneigten Außenfläche ein äußerer Randbereich des Griffelements ausgebildet , der in montiertem Zustand seitlich über die Außenseite des Fahrradlenkers übersteht. Bei einem abgeschrägten Ende des Fahrradlenkers wäre der Randbereich des Griffelements in montiertem Zustand in dem bezogen auf eine senkrechte Außenseite des Fahrradlenkers überstehenden Bereich des Fahrradlenkers angeordnet. Durch diesen erfindungsgemäß vorgesehenen äußeren Randbereich, der bei einem herkömmlichen Fahrradlenker gegenüber diesem um vorzugsweise 5 - 15 mm, insbesondere 8 - 12 mm übersteht, kann ein zusätzlicher Abstützbereich für die Hand des Fahrers realisiert werden. Hierdurch ist das Handling deutlich verbessert. Auch führt das Vorsehen eines derartigen zusätzlichen Randbereichs zu einer intuitiv ergonomischeren Handhaltung, insbesondere bei Enduro-Fahrrädern.

Zur weiteren Verbesserung der Ergonomie und insbesondere zur Verbesserung der Handhaltung bei Enduro-Fahrrädern bei abgewinkeltem Ellenbogen ist das Griffelement im Randbereich verdickt. Des Weiteren weist der verdickte Randbereich in montiertem Zustand nach oben. Insofern liegt in montiertem Zustand der Handballen des Fahrers auf dem verdickten Randbereich auf.

Die Außenfläche des Fahrradgriffs weist in bevorzugter Ausführungsform gegenüber einer Längsachse des Fahrradgriffs, die in montiertem Zustand der Längsachse des Fahrradlenkers entspricht, einen Winkel von 100 - 125°, vorzugsweise 110 - 115° auf. Bei einer nicht abgeschrägten, d.h. senkrecht zur Längsachse des Fahrradlenkers verlaufenden Außenseite des Fahrradlenkers ist der Winkel zwischen der Außenfläche des Griffelements und der Außenseite des Fahrradlenkers im Bereich von 10 - 35°, vorzugsweise 20 - 25°. Hierdurch können gute ergonomische Handhaltungen erzielt werden.

Zur weiteren Verbesserung der Handhaltung, insbesondere bei gewinkeltem Ellenbogen nimmt erfindungsgemäß die Dicke des Griffelements in dem in montiertem Zustand nach oben weisenden Bereich, etwa von der Griffmitte ausgehend in Richtung des äußeren Randbereichs zu. Die Dickenzunahme ist hierbei kontinuierlich und vorzugsweise stufenlos. Die Oberseite des Griffelements ist hierbei vorzugsweise eben, insbesondere nicht konvex ausgebildet. Gegenüber einem zylindrischen Griffelement erfolgt durch die äußere Verdickung eine Anhebung des Handballens im äußeren Bereich und somit eine ergonomisch bevorzugte Ausrichtung des Handgelenks. Durch diese Außenranderhöhung ergibt sich ein ergonomisch positives Verkippen des Handgelenks im Vergleich mit der Handstellung bei einem zylindrisch ausgebildeten Griffelement. Die Dickenzunahme stellt eine von der Neigung der Außenfläche des Fahrradgriffs unabhängige Erfindung dar.

Bei einer weiteren bevorzugten Ausführungsform ist auch eine Innenseite des Griffelements gegenüber der Längsachse des Fahrradgriffs geneigt. Vorzugsweise ist die Innenseite im Wesentlichen parallel zur Außenfläche des Fahrradgriffs, wobei eine Abweichung von ± 5° möglich ist. Bevorzugt ist es zumindest, dass die Neigung der Innenseite in dieselbe Richtung erfolgt wie die Neigung der Außenfläche des Fahrradgriffs. Des Weiteren ist es bevorzugt, dass im Bereich der Innenseite, insbesondere bei geneigter Innenseite, ein innerer Randbereich des Griffelements verdickt ausgebildet ist. Des Weiteren ist es bevorzugt, dass es sich bei diesem verdickten Innenbereich um den in montiertem Zustand nach unten weisenden Bereich des Fahrradgriffs handelt. In diesem Bereich liegt der Daumen des Fahrradfahrers an. Durch eine derartige Verdickung wird das Handling verbessert, da ein sichereres und zuverlässigeres Greifen des Fahrradgriffs gewährleistet ist. Auch wird wiederum die ergonomisch positive Handstellung unterstützt.

Zur Verbesserung der Klemmwirkung durch die Klemmschelle im Klemmbereich kann die Hülse einen Klemmschlitz aufweisen. Hierbei kann es sich um einen nur einige wenige Millimeter breiten Klemmschlitz, aber auch um einen sich ggf. um mehr als 90°, insbesondere auch mehr als 180° um den Umfang der Hülse erstreckenden Klemmschlitz handeln. Insbesondere bei einem relativ breiten Klemmschlitz, der sich beispielsweise um mehr als 30° des Umfangs der Hülse erstreckt, ist es möglich, einen Vorsprung bzw. eine Abstufung an dem Klemmelement vorzusehen, so dass die Lage des Klemmelements relativ zur Hülse definiert ist. Hierdurch ist eine Fehlmontage vermieden. Bevorzugt ist es hierbei, dass das Klemmelement derart ausgebildet ist, dass das Klemmmittel, wie die Schraube, an der Unterseite des Fahrradgriffs in montiertem Zustand angeordnet ist. Der verdickte Innenbereich des Griffelements kann insbesondere stufenlos in einen verdickten Bereich des Klemmelements, in dem die Schraube angeordnet ist, übergehen.

Besonders bevorzugt ist es, dass das Klemmelement in Seitenansicht im Wesentlichen trapezförmig ausgebildet ist. Hierdurch ist es bei entsprechender Ausgestaltung der Winkel der Innenseite und der Außenseite des Klemmelements möglich, dass der innere Abschluss des Fahrradgriffs, der durch die Außenseite des Klemmelements gebildet ist, wiederum im Wesentlichen senkrecht zur Längsrichtung des Griffelements bzw. des Fahrradlenkers verläuft. Dies hat den Vorteil, dass unmittelbar anschließend an das Klemmelement auf dem Lenker weitere Bauteile, wie die Bremse oder ein Schaltelement, montiert werden können. Bevorzugt ist es insofern, dass eine Innenseite des Klemmelements an der Innenseite des Griffelements anliegt. Bevorzugt erfolgt die Anlage ganzflächig bzw. vollständig am gesamten Umfang der Innenseite. Die Außenseite des Klemmelements ist vorzugsweise derart ausgebildet, dass sie in montiertem Zustand senkrecht zur Längsachse des Griffelements bzw. des Lenkers verläuft.

Nachfolgend wird die Erfindung anhand einer bevorzugten Ausführungsform unter Bezugnahme auf die anliegenden Zeichnungen näher erläutert.

Es zeigen:
- Fig. 1: eine schematische Ansicht des Fahrradgriffs von unten,
- Fig. 2: eine schematische Seitenansicht des in Fig. 1 dargestellten Fahrradgriffs,
- Fig. 3: eine schematische Schnittansicht des in Fig. 1 dargestellten Fahrradgriffs entlang der Linie III-III,
- Fig. 4: eine schematische perspektivische Ansicht des Klemmelements,
- Fig. 5: eine schematische Seitenansicht des Klemmelements,
- Fig. 6: eine schematische Draufsicht des Klemmelements, und
- Fig. 7: eine schematische Seitenansicht einer Hülse des Fahrradgriffs.

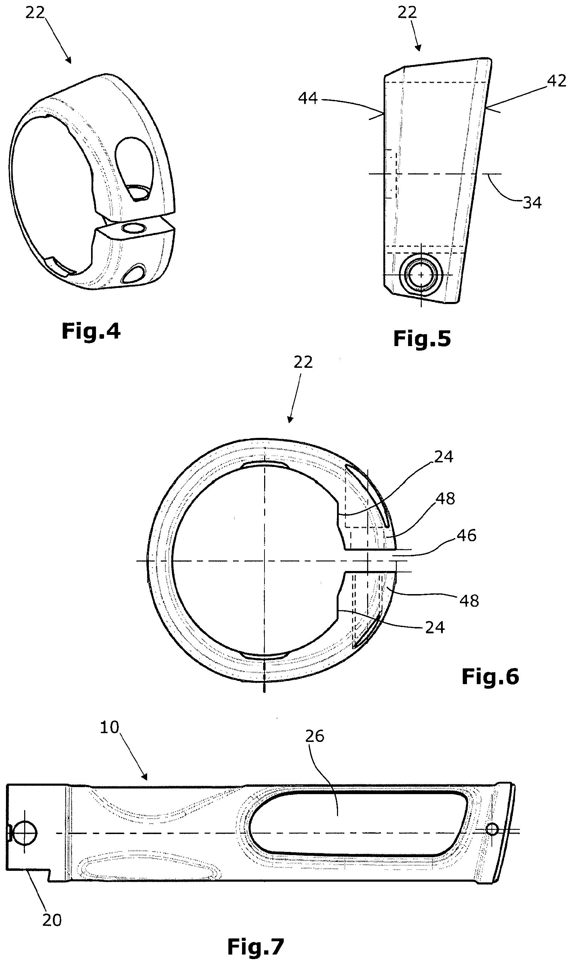

Der in bevorzugter Ausführungsform in den Figuren dargestellte erfindungsgemäße Fahrradgriff weist eine im Wesentlichen zylindrisch ausgebildete Hülse 10 (Fig. 7) auf. Dies Hülse 10 ist insbesondere aus härterem Kunststoff hergestellt und von einem Griffelement 12 umgeben, beispielsweise umspritzt. Das Griffelement 12 ist hierbei vorzugsweise aus einem weicheren Material hergestellt. Ggf. kann das Griffelement 12 auch aus unterschiedlichen Materialien hergestellt sein, so dass in einem in montiertem Zustand oberen Bereich 14 das Griffelement 12 ein anderes Material als in dem übrigen, insbesondere in dem in montiertem Zustand unteren Bereich 16 aufweist. Hierdurch kann die Griffigkeit des Fahrradgriffs und damit das Handling verbessert werden.

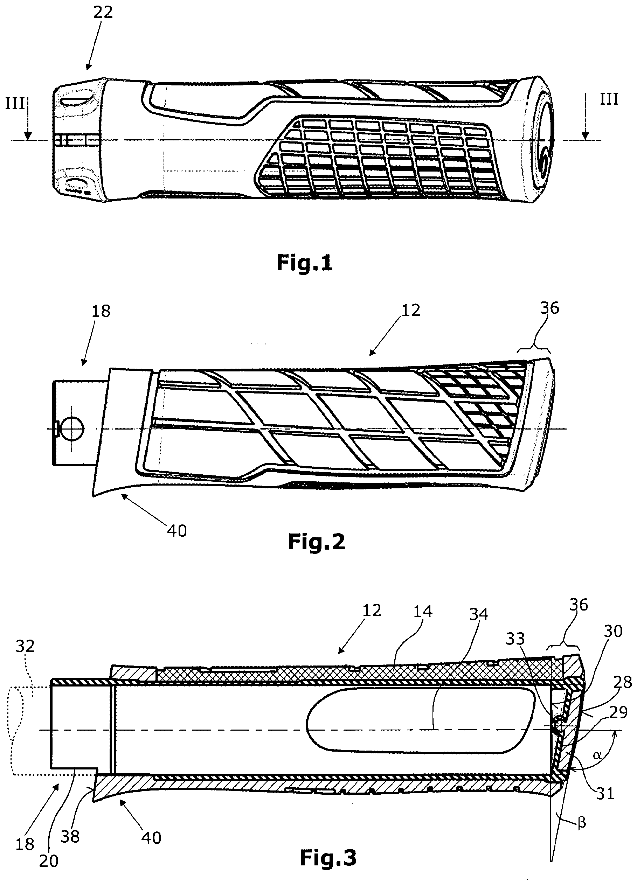

Die Hülse 10 im montierten Zustand unmittelbar an der Außenseite des Lenkrads an und weist vorzugsweise einen gegenüber dem Griffelement auf einer in montiertem Zustand inneren Seite vorstehenden Klemmbereich 18 (Fig. 3) auf. Der Klemmbereich 18, der im dargestellten Ausführungsbeispiel einen Klemmschlitz 20 aufweist, ist von einem im dargestellten Ausführungsbeispiel als Schelle ausgebildeten Klemmelement 22 (Fig. 1) umgeben. Der Schlitz 20 kann sich hierbei insbesondere um einen Winkelbereich von ca. 30° des Klemmbereichs 18 erstrecken. In diesem Bereich ist in montiertem Zustand ein Vorsprung 24 des Klemmelements 22 (Fig. 6) angeordnet. Hierdurch ist die Positionierung des Klemmelements 22 relativ zu der Hülse 12 und somit zu dem gesamten Fahrradgriff definiert.

Ferner kann die Hülse eine oder mehrere Ausnehmungen 26 (Fig. 7) aufweisen. Bei den Ausnehmungen 26 kann es sich um durchgehende Öffnungen in der Hülse 10 handeln oder auch um Vertiefungen in der Hülse 10. Die Ausnehmungen 26 bewirken, dass ein darüber angeordneter Bereich des Griffelements 12 eine geringere Unterstützung erfährt und insofern höhere Dämpfungseigenschaften realisiert sind. Die Ausnehmung 26 erstreckt sich insbesondere in einer äußeren Hälfte der Hülse 10 und ist in montiertem Zustand im Wesentlichen in Richtung des Fahrers ausgerichtet. Eine verbesserte, weichere Dämpfung erfolgt somit insbesondere im Bereich des Handtellers. Über diesen werden eine Vielzahl von Stößen in die Hand bzw. das Handgelenk des Fahrers eingeleitet.

Erfindungsgemäß ist eine Außenfläche 28 gegenüber einer Außenseite 30 eines Fahrradlenkers 32 (Fig. 3) geneigt. In nicht montiertem Zustand weist die Außenfläche 28 des Griffelements 12 gegenüber einer Längsachse 34 des Fahrradgriffs einen Winkel ≠ 90° auf. Der entsprechende Winkel α zwischen der Längsachse 34 und der Außenfläche 28 beträgt etwa 100 - 125°, vorzugsweise 110 - 115°. Ein Winkel β zwischen der Außenseite 28 des Griffelements und der Außenseite 30 des Fahrradlenkers 32 liegt somit im Bereich von 10 - 15° und vorzugsweise 20 - 25°.

Die Hülse 10 ist durch einen vorzugsweise ebenfalls aus steifem Material hergestellten Stopfen oder Einsatz 29 verschlossen. Dieser ist vorzugsweise mit der Hülse bspw. durch Verkleben, Verpressen, Verschweißen oder dergleichen fest verbunden. Der Einsatz 29 trägt ein insbesondere kreisförmig ausgebildetes Einsatzelement 31, das über eine Rastverbindung 33 fixiert ist. Der insbesondere aus steifem Material hergestellte Einsatz 29 dient zur Versteifung des Fahrradgriffs in den über die Lenkeraußenseite überstehenden Bereichen. Der Einsatz 29 verschließt vorzugsweise die Außenseite der Hülse 10.

Ein weiterer erfindungswesentlicher Aspekt besteht darin, dass ein Randbereich 36 des Griffelements 12 in montiertem Zustand seitlich über die Außenseite 30 des Fahrradlenkers 32 vorsteht (Fig. 3). Hierdurch ist eine Griffverbreiterung bezogen auf den Fahrradlenker erzielt. Dies führt zu einem besseren Handling und einer insbesondere bei Fahrradgriffen für Enduro-Fahrrädern ergonomischeren Hand- und Unterarmhaltung.

Der Randbereich 36 des Griffelements 12 ist ferner verdickt. Hierzu nimmt im dargestellten Ausführungsbeispiel das aus einem anderen Material hergestellte Teil 14 des Griffelements 12, ausgehend etwa von der Mitte des Griffelements 12, nach außen in der Dicke kontinuierlich zu. Die Dickenzunahme erfolgt hierbei vorzugsweise nur an einer im montierten Zustand oberen Seite des Griffelements. Insbesondere ausgehend von der Mitte des Griffelements nach außen, ist die Dicke des Griffelements in den übrigen Bereichen, d.h. in den in Fahrtrichtung nach vorne, hinten oder unten weisenden Bereichen konstant. Das Griffelement ist somit im Wesentlichen hohl-zylindrisch ausgestaltet, mit der Ausnahme der Verdickung im Randbereich 36, der kontinuierlichen Dickenzunahme an der Oberseite und der Verdickung im Randbereich 40 der Innenseite, wobei die Verdickung an der Innenseite optional ist.

Zur Verbesserung des Greifkomforts ist das Griffelement 12 aus Material, das eine gewisse Elastizität bzw. Weichheit aufweist und insbesondere weicher als die Hülse 10 ist. Dies gilt insbesondere auch für die Verdickungen im Randbereich 36 sowie im Randbereich 40.

Eine im Wesentlichen der Neigung der Außenfläche entsprechende Neigung weist auch eine Innenseite 38 auf. Die Innenseite 38 verläuft im Wesentlichen parallel zur Außenfläche 28.

Ein weiterer zur Verbesserung der Ergonomie der Handhaltung bevorzugter Aspekt der Erfindung besteht darin, dass ein innerer Randbereich 40 des Griffelements 12 ebenfalls verdickt ist. Hierbei handelt es sich um eine nur im Randbereich erfolgende Verdickung mit verhältnismäßig kleinem Radius. Im Unterschied zu der Verdickung des äußeren Randbereichs 36 beginnt diese Verdickung nur etwa 15 - 20 mm innerhalb des Griffelements 12. In montiertem Zustand ist die innere Verdickung 40 nach unten und die äußere Verdickung im Randbereich 36 nach oben ausgerichtet. An der inneren Verdickung 40 liegt somit der Daumen, und an der äußeren am Randbereich 36 vorgesehenen Verdickung der Handballen an. Hierdurch ist die Hand ergonomisch ausgerichtet.

Das im dargestellten Ausführungsbeispiel als Schelle ausgebildete Klemmelement 22 (Fig. 4 - 6) ist in Seitenansicht (Fig. 5) trapezförmig ausgestaltet. Eine Innenseite 42 des Klemmelements 22 ist gegenüber der Längsachse 34 des Griffelements in entgegengesetzter Richtung zu der Innenseite 38 des Griffelements 12 geneigt. In montiertem Zustand liegen die beiden Flächen 38, 42 ganzflächig aneinander an.

Die der Innenseite 42 gegenüberliegende Außenseite 44 des Klemmelements 22 ist senkrecht zu der Längsachse 34 ausgerichtet. In montiertem Zustand (Fig. 1) weist dies den Vorteil auf, dass unmittelbar anschließend an das Klemmelement 22, beispielsweise Klemmelemente für die Bremse oder die Schaltung auf dem Lenker 32 angeordnet werden können.

Das Klemmelement 32 weist an seiner in Seitenansicht (Fig. 5) schmaleren Seite eine Verdickung auf, in der ein Schlitz 46 ausgebildet ist. Über entsprechend ausgebildete Bohrungen 48, die ggf. ein Innengewinde aufweisen, kann ein Klemmmittel, wie eine Schraube, eingesetzt werden.

## Patentansprüche

1. Fahrradgriff, insbesondere für Enduro-Fahrräder, mit
einer im Wesentlichen zylindrischen Hülse (10) zum Aufstecken des Fahrradgriffs auf einen Fahrradlenker (32), und
einem die Hülse (10) umgebenden Griffelement (12),
wobei die Hülse (10) einen sich an eine Innenseite (38) des Griffelements (12) anschließenden Klemmbereich (18) aufweist, der von einem Klemmelement (22) umgeben ist,
**dadurch gekennzeichnet, dass**
das Griffelement (12) eine Außenfläche (28) aufweist, die in montiertem Zustand zu einer Längsachse (34) des Fahrradgriffs einen Winkel ≠ 90° aufweist, wobei aufgrund der geneigten Außenfläche (28) ein äußerer Randbereich (36) des Griffelements (12) ausgebildet ist, der in montiertem Zustand des Fahrradgriffs seitlich über die Außenseite (30) des Fahrradlenkers (32) übersteht,
das Griffelement im Randbereich verdickt ist, wobei der verdickte Randbereich in montiertem Zustand nach oben weist und
eine Dicke des Griffelements in einem im montierten Zustand nach oben weisenden Bereich ausgehend von etwa der Mitte des Griffelements bis zum im montierten Zustand äußeren Randbereichs kontinuierlich zunimmt.

2. Fahrradgriff nach Anspruch 1, **dadurch gekennzeichnet, dass** die Dickenzunahme stufenlos erfolgt.

3. Fahrradgriff nach Anspruch 1 oder 2, **dadurch gekennzeichnet, dass** eine Oberseite des Griffelements im Bereich der Dickenzunahme im Wesentlichen eben ist.

4. Fahrradgriff nach einem der Ansprüche 1 bis 3, dass das Griffelement (12) eine Außenfläche (28) aufweist, die in montiertem Zustand des Fahrradgriffs zu einer Außenseite (30) des Fahrradlenkers (32) geneigt ist.

5. Fahrradgriff nach einem der Ansprüche 1 bis 4, **dadurch gekennzeichnet, dass** die Außenfläche (28) gegenüber der Längsachse (34) des Fahrradgriffs einen Winkel (α) von 100 - 125°, insbesondere 110 - 115° aufweist.

6. Fahrradgriff nach einem der Ansprüche 1 - 5, **dadurch gekennzeichnet, dass** eine Innenseite (38) des Griffelements (12) gegenüber der Längsachse (34) des Fahrradgriffs geneigt ist, wobei die Innenseite (38) vorzugsweise im Wesentlichen parallel zur Außenfläche (28) verläuft.

7. Fahrradgriff nach Anspruch 6, **dadurch gekennzeichnet, dass** im Bereich der Innenseite (38) ein innerer Randbereich (40) des Griffelements verdickt ist, wobei der innere Randbereich (40) in montiertem Zustand des Fahrradgriffs vorzugsweise nach unten weist.

8. Fahrradgriff nach einem der Ansprüche 1 - 7, **dadurch gekennzeichnet, dass** der Klemmbereich (18) einen insbesondere in Längsrichtung (34) des Fahrradgriffs verlaufenden Klemmschlitz (20) aufweist.

9. Fahrradgriff nach Anspruch 8, **dadurch gekennzeichnet, dass** das Klemmelement (22) in Seitenansicht im Wesentlichen trapezförmig ist.

10. Fahrradgriff nach Anspruch 8 oder 9, **dadurch gekennzeichnet, dass** das Klemmelement (22) eine an der Innenseite (38) des Griffelements (12) anliegende Innenseite (42) aufweist.

11. Fahrradgriff nach einem der Ansprüche 8 - 10, **dadurch gekennzeichnet, dass** eine Außenseite (44) des Klemmelement (22) im Wesentlichen senkrecht zur Längsachse (34) des Fahrradgriffs ausgerichtet ist.

## Claims

1. Bicycle handle grip, in particular for Enduro bicycles, comprising
a substantially cylindrical sleeve (10) for slipping the bicycle handle grip onto a bicycle handlebar (32), and
a grip element (12) surrounding the sleeve (10),
the sleeve (10) having a clamping portion (18) adjoining an inner side (38) of the grip element (12) and being surrounded by a clamping element (22),
**characterized in that**
the grip element (12) has an outer surface (28) which in the mounted state has an angle of ≠ 90° relative to a longitudinal axis (34) of the bicycle handle grip, wherein due to the inclined outer surface (28) an outer edge portion (36) of the grip element (12) is formed which in the mounted state of the bicycle handle grip extends laterally beyond the outer side (30) of the bicycle handlebar (32),
the grip element is enlarged in the edge portion, wherein the enlarged edge portion faces upward in the mounted state, and
a thickness of the grip element in a portion facing upward in the mounted state increases continuously from about the middle of the grip element to the portion which is the outer edge portion in the mounted state.

2. Bicycle handlebar grip according to claim 1, **characterized in that** the increase in thickness is smooth.

3. Bicycle handlebar grip according to claim 1 or 2, **characterized in that** an upper side of the grip element is substantially planar in the region of the increase in thickness.

4. Bicycle handlebar grip according to one of claims 1 to 3, **characterized in that** the grip element (12) has an outer surface (28) which in the mounted state of the bicycle handle grip is inclined towards an outer side (30) of the bicycle handlebar (32).

5. Bicycle handlebar grip according to one of claims 1 to 4, **characterized in that** the outer surface (28) has an angle (α) of 100 - 125°, in particular 110 - 115°, with respect to the longitudinal axis (34) of the bicycle handlebar.

6. Bicycle handlebar grip according to one of claims 1 to 5, **characterized in that** an inner side (38) of the grip element (12) is inclined with respect to the longitudinal axis (34) of the bicycle handle grip, wherein the inner side (38) preferably extends substantially in parallel with the outer surface (28).

7. Bicycle handlebar grip according to claim 6, **characterized in that** an inner edge portion (40) of the grip element is enlarged in the region of the inner side (38), wherein the inner edge portion (40) preferably faces downward in the mounted state of the bicycle handle grip.

8. Bicycle handlebar grip according to one of claims 1 to 7, **characterized in that** the clamping region (18) has a clamping slot (20) extending in particular in the longitudinal direction (34) of the bicycle handle grip.

9. Bicycle handlebar grip according to claim 8, **characterized in that** the clamping element (22) is substantially trapezoidal in side view.

10. Bicycle handlebar grip according to claim 8 or 9, **characterized in that** the clamping element (22) has an inner side (42) in contact with the inner side of the grip element (12).

11. Bicycle handlebar grip according to one of claims 8 to 10, **characterized in that** an outer side (44) of the clamping element (22) is directed substantially perpendicular to the longitudinal axis (34) of the bicycle handle grip.

## Revendications

1. Poignée de vélo, en particulier pour des vélos d'enduro, comprenant
un fourreau (10) essentiellement cylindrique permettant de monter la poignée de vélo sur un guidon de vélo (32), et
un élément de préhension (12) entourant le fourreau (10),
dans laquelle le fourreau (10) présente une région de serrage (18) qui se raccorde à une face intérieure (38) de l'élément de préhension (12) et qui est entourée d'un élément de serrage (22),
**caractérisée en ce que**
l'élément de préhension (12) présente une surface extérieure (28) qui, à l'état monté, présente un angle ≠ 90° par rapport à un axe longitudinal (34) de la poignée de vélo, une région de bord extérieure (36) de l'élément de préhension (12) étant formée du fait de la surface extérieure (28) inclinée, et ladite région de bord extérieure, à l'état monté de la poignée de vélo, dépassant latéralement de la face extérieure (30) du guidon de vélo (32), l'élément de préhension est épaissi dans la région de bord, la région de bord épaissi pointant vers le haut à l'état monté et
une épaisseur de l'élément de préhension, dans une région pointant vers le haut à l'état monté, augmente de manière continue à partir d'environ la zone centrale de l'élément de préhension jusqu'à la région de bord extérieure à l'état monté.

2. Poignée de vélo selon la revendication 1, **caractérisée en ce que** l'augmentation d'épaisseur se fait de manière continue.

3. Poignée de vélo selon la revendication 1 ou 2, **caractérisée en ce qu'**une face supérieure de l'élément de préhension est essentiellement plane dans la région de l'augmentation d'épaisseur.

4. Poignée de vélo selon l'une des revendications 1 à 3, **caractérisée en ce que** l'élément de préhension (12) présente une surface extérieure (28) qui, à l'état monté de la poignée de vélo, est inclinée vers une face extérieure (30) du guidon de vélo (32).

5. Poignée de vélo selon l'une des revendications 1 à 4, **caractérisée en ce que** la surface extérieure (28) présente un angle (α) compris entre 100 et 125°, en particulier compris entre 110 et 115°, par rapport à l'axe longitudinal (34) de la poignée de vélo.

6. Poignée de vélo selon l'une des revendications 1 à 5, **caractérisée en ce qu'**une face intérieure (38) de l'élément de préhension (12) est inclinée par rapport à l'axe longitudinal (34) de la poignée de vélo, la face intérieure (38) s'étendant de manière préférée essentiellement parallèlement à la surface extérieure (28).

7. Poignée de vélo selon la revendication 6, **caractérisée en ce qu'**une région de bord intérieure (40) de l'élément de préhension est épaissie dans la région de la face intérieure (38), la région de bord intérieure (40) pointant de manière préférée vers le bas à l'état monté de la poignée de vélo.

8. Poignée de vélo selon l'une quelconque des revendications 1 à 7, **caractérisée en ce que** la région de serrage (18) présente une fente de serrage (20) s'étendant en particulier dans la direction longitudinale (34) de la poignée de vélo.

9. Poignée de vélo selon la revendication 8, **caractérisée en ce que** l'élément de serrage (22) est essentiellement de forme trapézoïdale en vue latérale.

10. Poignée de vélo selon la revendication 8 ou 9, **caractérisée en ce que** l'élément de serrage (22) présente une face intérieure (42) appliquée contre la face intérieure (38) de l'élément de préhension (12).

11. Poignée de vélo selon l'une des revendications 8 à 10, **caractérisée en ce qu'**une face extérieure (44) de l'élément de serrage (22) est orientée de manière essentiellement perpendiculaire par rapport à l'axe longitudinal (34) de la poignée de vélo.
